(19) Europäisches Patentamt
European Patent Office
Office européen des brevets

(11) **EP 4 506 304 A1**

(12) **EUROPEAN PATENT APPLICATION**
published in accordance with Art. 153(4) EPC

(43) Date of publication:
**12.02.2025 Bulletin 2025/07**

(21) Application number: **23784708.2**

(22) Date of filing: **31.03.2023**

(51) International Patent Classification (IPC):
**C01B 21/084** (2006.01)

(52) Cooperative Patent Classification (CPC):
**C01B 21/084**

(86) International application number:
**PCT/JP2023/013517**

(87) International publication number:
**WO 2023/195421 (12.10.2023 Gazette 2023/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **05.04.2022 JP 2022062962**

(71) Applicant: **Resonac Corporation
Tokyo 105-7325 (JP)**

(72) Inventor: **IWASAKI, Jumpei
Tokyo 105-8518 (JP)**

(74) Representative: **Strehl Schübel-Hopf & Partner
Maximilianstrasse 54
80538 München (DE)**

(54) **METHOD FOR STORING FLUORINE-CONTAINING NITROGEN COMPOUND**

(57) There is provided a method for storing a fluorine-containing nitrogen compound that prevents the progress of decomposition of the fluorine-containing nitrogen compound during storage. The fluorine-containing nitrogen compound, which is at least one type among nitrosyl fluoride, nitroyl fluoride, and trifluoroamine-N-oxide, contains or does not contain at least one type among manganese, cobalt, nickel, and silicon as metal impurities. When any of the foregoing is contained, the fluorine-containing nitrogen compound is stored in a container with the total concentration of the manganese, the cobalt, the nickel, and the silicon set to 1000 ppb by mass or less.

EP 4 506 304 A1

## Description

Technical Field

The present invention relates to a method for storing a fluorine-containing nitrogen compound, which is at least one type among nitrosyl fluoride (NOF), nitroyl fluoride ($FNO_2$), and trifluoroamine-N-oxide ($F_3NO$).

Background Art

For example, fluorine-containing nitrogen compounds disclosed in PTLS 1, 2, for example, are sometimes used as an etching gas for dry etching.

Citation List

Patent Literatures

PTL 1: JP 2021-509538 A
PTL 2: US 2020/0203127 A

Summary of Invention

Technical Problem

However, the fluorine-containing nitrogen compound has posed a risk of a decrease in purity due to the progress of decomposition during long-term storage.
It is an object of the present invention to provide a method for storing a fluorine-containing nitrogen compound that prevents the progress of the decomposition of the fluorine-containing nitrogen compound during storage.

Solution to Problem

To achieve the above-described object, one aspect of the present invention is as described in [1] to [4] below.

[1] A method for storing a fluorine-containing nitrogen compound, the fluorine-containing nitrogen compound being at least one type among nitrosyl fluoride, nitroyl fluoride, and trifluoroamine-N-oxide, including:
storing the fluorine-containing nitrogen compound in a container, in which the fluorine-containing nitrogen compound contains or does not contain at least one type among manganese, cobalt, nickel, and silicon as metal impurities and, when any of the foregoing is contained, the total concentration of the manganese, the cobalt, the nickel, and the silicon is set to 1000 ppb by mass or less.
[2] The method for storing a fluorine-containing nitrogen compound according to [1], including: storing the fluorine-containing nitrogen compound in a container, in which the fluorine-containing nitrogen compound further contains or does not contain at least one type among sodium, potassium, magnesium, and calcium as the metal impurities and, when any of the foregoing is contained, the total concentration of the manganese, the cobalt, the nickel, and the silicon and the sodium, the potassium, the magnesium, and the calcium is set to 2000 ppb by mass or less.
[3] The method for storing a fluorine-containing nitrogen compound according to [1] or [2] including: storing the fluorine-containing nitrogen compound at a temperature of -20°C or more and 50°C or less.
[4] The method for storing a fluorine-containing nitrogen compound according to any one of [1] to [3], in which a material of the container is manganese steel.

Advantageous Effects of Invention

According to the present invention, the decomposition of the fluorine-containing nitrogen compound hardly progresses during storage.

Description of Embodiments

Hereinafter, one embodiment of the present invention is described. This embodiment describes one example of the present invention, and the present invention is not limited to this embodiment. This embodiment can be variously altered or improved, and such altered or improved aspects can also be included in the present invention.

A method for storing a fluorine-containing nitrogen compound according to this embodiment is a method for storing a fluorine-containing nitrogen compound, the fluorine-containing nitrogen compound being at least one type among nitrosyl fluoride, nitroyl fluoride, and trifluoroamine-N-oxide, including: storing the fluorine-containing nitrogen compound in a container, in which the fluorine-containing nitrogen compound contains or does not contain at least one type among manganese (Mn), cobalt (Co), nickel (Ni), and silicon (Si) as metal impurities and, when any of the foregoing is contained, the total concentration of the manganese, the cobalt, the nickel, and the silicon is set to 1000 ppb by mass or less.

When the fluorine-containing nitrogen compound contains at least one type among manganese, cobalt, nickel, and silicon as the metal impurities, the catalysis of the metal impurities accelerates a decomposition reaction of the fluorine-containing nitrogen compound. Therefore, the fluorine-containing nitrogen compound containing the metal impurities poses a risk of the progress of the decomposition during storage, resulting in a decrease in purity.

Examples of reaction formulae of reactions in which nitrosyl fluoride, nitroyl fluoride, and trifluoroamine-N-oxide are decomposed by the action of metals M are individually shown below.

$$nNOF + M \rightarrow MF_n + nNO$$

$$nFNO_2 + M \rightarrow MF_n + nNO_2$$

$$nF_3NO + 3M \rightarrow 3MF_n + nNO$$

The fluorine-containing nitrogen compound stored according to the method for storing a fluorine-containing nitrogen compound of this embodiment does not contain the metal impurities or, even when the fluorine-containing nitrogen compound contains the metal impurities, the content of the metal impurities is small, and therefore, even in the case of long-term storage, the decomposition of the fluorine-containing nitrogen compound hardly progresses and a decrease in purity hardly occurs. Accordingly, the fluorine-containing nitrogen compound can be stably stored over a long period of time.

The concentrations of the metal impurities in the fluorine-containing nitrogen compound are not considered in the technologies disclosed in PTLS 1, 2. Therefore, when the fluorine-containing nitrogen compound has been stored according to the technologies disclosed in PTLS 1, 2, the decomposition reaction of the fluorine-containing nitrogen compound has been sometimes accelerated by the metal impurities. As a result, the decomposition of the fluorine-containing nitrogen compound has sometimes progressed during storage, resulting in a decrease in purity.

Hereinafter, the method for storing a fluorine-containing nitrogen compound according to this embodiment is described in more detail.

[Fluorine-containing nitrogen compound]

The fluorine-containing nitrogen compound is at least one type among nitrosyl fluoride, nitroyl fluoride, and trifluoroamine-N-oxide as described above. More specifically, the fluorine-containing nitrogen compound may be any one type among nitrosyl fluoride, nitroyl fluoride, and trifluoroamine-N-oxide, may be a mixture of two types thereof, or may be a mixture of three types thereof.

When the fluorine-containing nitrogen compound is a mixture of two type or three type of nitrosyl fluoride, nitroyl fluoride, and trifluoroamine-N-oxide, the content of the main component, which is a component having the largest content, is preferably 99% by mol or more, more preferably 99.9% by mol or more, and still more preferably 99.99% by mol or more. The total content of components other than the main component is preferably 0.1% by mol or less, more preferably 0.01% by mol or less, and still more preferably 0.001% by mol or less.

When the fluorine-containing nitrogen compound is stored in a container, gas containing only the fluorine-containing nitrogen compound may be stored in the container or mixed gas containing the fluorine-containing nitrogen compound and dilution gas may be stored in the container. The fluorine-containing nitrogen compound may also be partially or entirely liquefied and stored in the container. As the dilution gas, at least one type selected from nitrogen gas ($N_2$), helium (He), neon (Ne), argon (Ar), krypton (Kr), and xenon (Xe) is usable. The content of the dilution gas is preferably 90% by volume or less and more preferably 50% by volume or less based on the total amount of the gas stored in the container.

[Container]

The container in which the fluorine-containing nitrogen compound is stored is not particularly limited in shape, size, material, and the like insofar as it is capable of housing and sealing the fluorine-containing nitrogen compound. However, the container is preferably one having corrosion resistance to the fluorine-containing nitrogen compound. Examples of materials of the container include manganese steel, stainless steel, nickel, Hastelloy (registered trademark), Inconel (registered trademark), Monel (registered trademark), and the like from the viewpoint of the corrosion resistance.

[Metal impurities]

The fluorine-containing nitrogen compound in the method for storing a fluorine-containing nitrogen compound according to this embodiment is stored in a container, in which the fluorine-containing nitrogen compound contains or does not contain at least one type among manganese, cobalt, nickel, and silicon as the metal impurities and, when any of the foregoing is contained, the total concentration of the manganese, the cobalt, the nickel, and the silicon is set to 1000 ppb by mass or less. Therefore, the decomposition reaction of the fluorine-containing nitrogen compound is hardly accelerated and, as a result, the decomposition of the fluorine-containing nitrogen compound hardly progresses during storage as described above. Herein, the "does not contain" means that the manganese, the cobalt, the nickel, and the silicon cannot be quantified with an inductively coupled plasma mass spectrometer (ICP-MS).

To prevent the progress of the degradation of the fluorine-containing nitrogen compound during storage, the total concentration of the manganese, the cobalt, the nickel, and the silicon contained in the fluorine-containing nitrogen compound is required to be 1000 ppb by mass or less, and is preferably 500 ppb by mass or less and more preferably 100 ppb by mass or less.

To further suppress the progress of the decomposition of the fluorine-containing nitrogen compound during storage, the concentrations of the manganese, the cobalt, the nickel, and the silicon contained in the fluorine-containing nitrogen compound are individually preferably 300 ppb by mass or less and more preferably 100 ppb by mass or less.

The total concentration of the manganese, the cobalt, the nickel, and the silicon may be 1 ppb by mass or more.

The concentrations of the metal impurities, such as the manganese, the cobalt, the nickel, and the silicon, in the fluorine-containing nitrogen compound can be quantified with an inductively coupled plasma mass spectrometer (ICP-MS).

To further suppress the progress of the decomposition of the fluorine-containing nitrogen compound during storage, the concentrations of sodium (Na), potassium (K), magnesium (Mg), and calcium (Ca) are preferably set to be low as well as the concentrations of the manganese, the cobalt, the nickel, and the silicon in the fluorine-containing nitrogen compound. In the present invention, the metals, such as manganese, cobalt, nickel, silicon, sodium, potassium, magnesium, and calcium, include metal atoms and metal ions.

More specifically, the fluorine-containing nitrogen compound is preferably stored as follows. The fluorine-containing nitrogen compound contains or does not contain at least one type among manganese, cobalt, nickel, and silicon as the metal impurities and, when any of the foregoing is contained, the total concentration of the manganese, the cobalt, the nickel, and the silicon is set to 1000 ppb by mass or less. In addition thereto, the fluorine-containing nitrogen compound contains or does not contain at least one type among sodium, potassium, magnesium, and calcium as the metal impurities and, when any of the foregoing is contained, the total concentration of the manganese, the cobalt, the nickel, and the silicon and the sodium, the potassium, the magnesium, and the calcium is set to 2000 ppb by mass or less. The total concentration of the sodium, the potassium, the magnesium, and the calcium is more preferably 1000 ppb by mass or less.

When any of the foregoing is contained, the total concentration of the manganese, the cobalt, the nickel, and the silicon and the sodium, the potassium, the magnesium, and the calcium is preferably set to 1000 ppb by mass or less and more preferably set to 500 ppb by mass or less.

The total concentration of the manganese, the cobalt, the nickel, and the silicon and the sodium, the potassium, the magnesium, and the calcium may be 2 ppb by mass or more.

To further suppress the progress of the decomposition of the fluorine-containing nitrogen compound during storage, the concentrations of copper (Cu), zinc (Zn), and aluminum (Al) is preferably set to be low as well as the concentrations of the manganese, the cobalt, the nickel, and the silicon and the sodium, the potassium, the magnesium, and the calcium in the fluorine-containing nitrogen compound.

More specifically, when the fluorine-containing nitrogen compound contains at least one type among manganese, cobalt, nickel, and silicon and at least one type among sodium, potassium, magnesium, and calcium as the metal impurities, and further contains at least one type among copper, zinc, and aluminum as the metal impurities, the fluorine-containing nitrogen compound is preferably stored with the total concentration of all of these contained metal impurities set to 3000 ppb by mass or less. The total concentration of all of these contained metal impurities is more preferably set to 1500 ppb by mass or less and still more preferably set to 1000 ppb by mass or less.

The above-described metal impurities are sometimes contained in the fluorine-containing nitrogen compound in the forms of a metal simple substance, a metal compound, a metal halide, and a metal complex. The forms of the metal impurities in the fluorine-containing nitrogen compound include fine particles, liquid droplets, gas, and the like. The manganese, the cobalt, the nickel, and the silicon are considered to be mixed into the fluorine-containing nitrogen compound originating from raw materials, reaction catalysts, reactors, refining devices, and the like used in the synthesis of the fluorine-containing nitrogen compound.

[Method for producing fluorine-containing nitrogen compound having low concentration of metal impurities]

A method for producing a fluorine-containing nitrogen compound having a low concentration of metal impurities is not particularly limited, and includes a method for removing metal impurities from a fluorine-containing nitrogen compound having a high concentration of metal impurities, for example. A method for removing metal impurities from the fluorine-containing nitrogen compound is not particularly limited, and known methods can be adopted. Examples include a method using a filter, a method using an adsorbent, and distillation.

A material of a filter, through which a fluorine-containing nitrogen compound gas is selectively passed, is preferably resin to avoid the mixing of metal components into the fluorine-containing nitrogen compound and is particularly preferably polytetrafluoroethylene. The average pore size of the filter is preferably 0.01 μm or more and 30 μm or less and more preferably 0.1 μm or more and 10 μm or less. When the average pore size is in the ranges above, the metal impurities can be sufficiently removed, and a sufficient flow rate of the fluorine-containing nitrogen compound gas can be ensured and high productivity can be achieved.

The flow rate at which the fluorine-containing nitrogen compound gas is passed through a filter is preferably set to 3 mL/min or more and 300 mL/min or less and more preferably set to 10 mL/min or more and 50 mL/min or less per $cm^2$ of the filter area. When the flow rate of the fluorine-containing nitrogen compound gas is in the ranges above, the pressure of the fluorine-containing nitrogen compound gas is prevented from becoming high, so that a risk of leakage of the fluorine-containing nitrogen compound gas is lowered and high productivity can be achieved.

[Pressure condition in storage]

A pressure condition in storage in the method for storing a fluorine-containing nitrogen compound according to this embodiment is not particularly limited insofar as the fluorine-containing nitrogen compound can be sealed and stored in a container, and is preferably set to 0.05 MPa or more and 5 MPa or less and more preferably set to 0.1 MPa or more and 3 MPa or less. The pressure condition in the ranges above makes it possible to make the fluorine-containing nitrogen compound flow without being humidified when the container is connected to a dry etching device.

[Temperature condition in storage]

A temperature condition in storage in the method for storing a fluorine-containing nitrogen compound according to this embodiment is not particularly limited, and is preferably set to -20°C or more and 50°C or less and more preferably set to 0°C or more and 40°C or less. When the temperature in storage is -20°C or more, the container is hardly deformed, and therefore a possibility that the airtightness of the container is lost, allowing the mixing of oxygen, water, and the like into the container, is low. The mixing of oxygen, water, and the like poses a risk that the decomposition reaction of the fluorine-containing nitrogen compound is accelerated. When the temperature in storage is 50°C or less, the decomposition reaction of the fluorine-containing nitrogen compound is suppressed.

[Etching]

The fluorine-containing nitrogen compound stored according to the method for storing a fluorine-containing nitrogen compound of this embodiment is usable as an etching gas. An etching gas containing the fluorine-containing nitrogen compound stored according to the method for storing a fluorine-containing nitrogen compound of this embodiment is usable for both plasma etching using plasma and plasma-less etching without using plasma.

Examples of the plasma etching include reactive ion etching (RIE), inductively coupled plasma (ICP) etching, capacitively coupled plasma (CCP) etching, electron cyclotron resonance (ECR) plasma etching, and microwave plasma etching.

In the plasma etching, plasma may be generated in a chamber where a material to be etched is placed or a plasma generating chamber and the chamber where a material to be etched is placed may be separated from each other (i.e., remote plasma may be used).

EXAMPLES

Hereinafter, the present invention is more specifically described with reference to Examples and Comparative Examples. Fluorine-containing nitrogen compounds containing various concentrations of metal impurities were prepared. Preparation Examples of the fluorine-containing nitrogen compounds are described below.

(Preparation Example 1)

One 10 L volume manganese steel cylinder and four 1 L volume sealable manganese steel cylinders were prepared. The cylinders are referred to as a cylinder A, a cylinder B, a cylinder C, and a cylinder D in order. The cylinder was filled with 5000 g of nitrosyl fluoride (boiling point under normal pressure: -59.9°C). The nitrosyl fluoride was liquefied by being cooled to -78°C, forming a liquid phase part and a gas phase part at about 100 kPa. The cylinders A, B, C, D were cooled to -78°C after the inside was depressurized to 1 kPa or less with a vacuum pump.

500 g of nitrosyl fluoride gas was extracted from an upper outlet, where the gas phase part is present, of the cylinder, passed through a filter, and then liquefied at -78°C and collected in the cylinder A in the depressurized state. The filter is a PTFE filter manufactured by FLON INDUSTRY and has an outer diameter of 50 mm, a thickness of 80 $\mu$m, and an average pore size of 0.3 $\mu$m. The flow rate of the gas when passed through the filter was controlled to 500 mL/min with a mass flow controller. The amount of the nitrosyl fluoride collected in the cylinder A was 498 g.

The nitrosyl fluoride collected in the cylinder A is set as Sample 1-1. The nitrosyl fluoride collected in the cylinder A has a gas phase part and a liquid phase part. The gas phase part was extracted from an upper outlet and the concentrations of various metal impurities were measured with an inductively coupled plasma mass spectrometer. The results are shown in Table 1. The details of a method for measuring the concentrations of various metal impurities using an inductively coupled plasma mass spectrometer are as follows.

While the nitrosyl fluoride in the liquid phase in the cylinder A was being vaporized at -50°C, the nitrosyl fluoride gas was extracted from the gas phase part, and made to flow at a flow rate of 100 mL/min into 100 g of an aqueous nitric acid solution having a concentration of 1 mol/L for bubbling. This bubbling brought the nitrosyl fluoride and the aqueous nitric acid solution into contact with each other, making the aqueous nitric acid solution absorb the metal impurities. The mass of the aqueous nitric acid solution after the bubbling was 96 g (M1). As a mass difference in the cylinder A before and after the bubbling, the mass decreased by 14 g (M2).

10 g (M3) of the aqueous nitric acid solution after the bubbling was collected and diluted to 100 mL (V) with ultrapure water using a female flask. The concentrations of various metal atoms in the diluted aqueous nitric acid solution were measured with an inductively coupled plasma mass spectrometer, and the concentrations (C, unit: g/g) of various metal atoms in the nitrosyl fluoride were calculated using the measured values (c1, unit: g/mL) and the following equation.

$$C = \{(c1 \times V) \times (M1/M3)\}/M2$$

[Table 1]

|  | Mn | Co | Ni | Si | Total | Na | K | Mg | Ca | Total | Total of all metal impurities |
|---|---|---|---|---|---|---|---|---|---|---|---|
| Sample 1-1 | 3 | 2 | 3 | 5 | 13 | - | - | - | - | - | 13 |
| Sample 1-2 | 10 | 10 | 12 | 19 | 51 | - | - | - | - | - | 51 |
| Sample 1-3 | 110 | 126 | 139 | 161 | 536 | 137 | 121 | 115 | 143 | 516 | 1052 |
| Sample 1-4 | 204 | 245 | 280 | 328 | 1057 | - | - | - | - | - | 1057 |
| *) Unit of numerical values is ppb by mass. "-" indicates "not measured". |

Next, the cylinder A was controlled to about -50°C, forming a liquid phase part and a gas phase part. 100 g of the nitrosyl fluoride gas was extracted from an upper outlet, where the gas phase part is present, of the cylinder A, and transferred to and collected in the cylinder B in the depressurized state. Further, 10 g of the nitrosyl fluoride gas was extracted from the cylinder and transferred to and collected in the cylinder B in the depressurized state. Then, the temperature of the cylinder B was raised to room temperature, and the cylinder B was allowed to stand still for 24 hours in a sealed state. The nitrosyl fluoride after standing still is set as Sample 1-2. The nitrosyl fluoride gas was extracted from an upper outlet, where the gas phase part is present, of the cylinder B after standing still, and the concentrations of various metal impurities were measured in the same manner as above using an inductively coupled plasma mass spectrometer. The results are shown in Table 1.

Similarly, 100 g of the nitrosyl fluoride gas was extracted from the upper outlet, where the gas phase part is present, of the cylinder A, and transferred to and collected in the cylinder C in the depressurized state. Further, 100 g of the nitrosyl fluoride gas was extracted from the cylinder and transferred to and collected in the cylinder C in the depressurized state. Then, the temperature of the cylinder C was raised to room temperature, and the cylinder C was allowed to stand still for 24 hours in a sealed state. The nitrosyl fluoride after standing still is set as Sample 1-3. The nitrosyl fluoride gas was extracted from an upper outlet, where the gas phase part is present, of the cylinder C after standing still, and the concentrations of various metal impurities were measured in the same manner as above using an inductively coupled plasma mass spectrometer. The results are shown in Table 1.

Similarly, 100 g of the nitrosyl fluoride gas was extracted from the upper outlet, where the gas phase part is present, of the cylinder A, and transferred to and collected in the cylinder D in the depressurized state. Further, 200 g of the nitrosyl fluoride gas was extracted from the cylinder and transferred to and collected in the cylinder D in the depressurized state. Then, the temperature of the cylinder D was raised to room temperature, and the cylinder D was allowed to stand still for 24 hours. The nitrosyl fluoride after standing still is set as Sample 1-4. The nitrosyl fluoride gas was extracted from an upper outlet, where the gas phase part is present, of the cylinder D after standing still, and the concentrations of various metal impurities were measured in the same manner as above using an inductively coupled plasma mass spectrometer. The results are shown in Table 1.

(Preparation Example 2)

Samples 2-1 to 2-4 were prepared by performing the same operation as that in Preparation Example 1, except that nitroyl fluoride was used as the fluorine-containing nitrogen compound. Then, the concentrations of various metal impurities of each sample were measured using an inductively coupled plasma mass spectrometer in the same manner as in Preparation Example 1. The results are shown in Table 2.

[Table 2]

|  | Mn | Co | Ni | Si | Total | Na | K | Mg | Ca | Total | Total of all metal impurities |
|---|---|---|---|---|---|---|---|---|---|---|---|
| Sample 2-1 | 3 | 1 | 5 | 3 | 12 | - | - | - | - | - | 12 |
| Sample 2-2 | 9 | 11 | 15 | 18 | 53 | - | - | - | - | - | 53 |
| Sample 2-3 | 109 | 115 | 140 | 157 | 521 | 123 | 126 | 120 | 138 | 507 | 1028 |
| Sample 2-4 | 213 | 222 | 265 | 312 | 1012 | - | - | - | - | - | 1012 |
| *) Unit of numerical values is ppb by mass. "-" indicates "not measured". | | | | | | | | | | | |

(Preparation Example 3)

Samples 3-1 to 3-4 were prepared by performing the same operation as that in Preparation Example 1, except that trifluoroamine-N-oxide was used as the fluorine-containing nitrogen compound. Then, the concentrations of various metal impurities of each sample were measured using an inductively coupled plasma mass spectrometer in the same manner as in Preparation Example 1. The results are shown in Table 3.

[Table 3]

|  | Mn | Co | Ni | Si | Total | Na | K | Mg | Ca | Total | Total of all metal impurities |
|---|---|---|---|---|---|---|---|---|---|---|---|
| Sample 3-1 | 2 | 4 | 2 | 6 | 14 | - | - | - | - | - | 14 |
| Sample 3-2 | 7 | 12 | 9 | 15 | 43 | - | - | - | - | - | 43 |
| Sample 3-3 | 103 | 128 | 136 | 161 | 528 | 131 | 126 | 139 | 161 | 557 | 1085 |
| Sample 3-4 | 200 | 231 | 274 | 327 | 1032 | - | - | - | - | - | 1032 |
| *) Unit of numerical values is ppb by mass. "-" indicates "not measured". | | | | | | | | | | | |

(Example 1)

First, refence gases (reference nitrogen monoxide gas and reference nitrogen dioxide gas) were analyzed using gas chromatography. By comparing the peak area of the reference nitrogen monoxide gas and the peak area of the reference nitrogen dioxide gas obtained by the analysis of the reference gases with the peak area of nitrogen monoxide and the peak area of nitrogen dioxide gas obtained by the analysis of the gases extracted from the gas phase part of each cylinder, the nitrogen monoxide and the nitrogen dioxide can be quantified.

Next, the sealed cylinder A was allowed to stand still at 20°C for 30 days, and the nitrosyl fluoride gas was extracted from the gas phase part of the cylinder A and analyzed by gas chromatography. Then, the concentration of a decomposition product (nitrogen monoxide) of the nitrosyl fluoride present in Sample 1-1 was quantified. As a result, the concentration of the nitrogen monoxide was 320 ppm by mass.

The measurement conditions of the gas chromatography are as follows.

Gas chromatograph: GC-2014 manufactured by Shimadzu Corporation
Column: Shincarbon-ST manufactured by Shinwa Chemical Industries Ltd.
Injection temperature: 150°C
Column temperature: 50°C
Detector: TCD
Detector temperature: 200°C
Current: 180 mA
Carrier gas: helium
Carrier gas flow rate: 100 mL/min
Detection limit: 1 ppm by mass

(Examples 2 to 9 and Comparative Examples 1 to 3)

The analysis targets and the analysis results in Examples 2 to 9 and Comparative Examples 1 to 3 are shown in Table 4, in comparison with Example 1. More specifically, the analysis was performed by the same operation as that in Example 1, except for the items shown in Table 4. A decomposition product of the nitroyl fluoride is nitrogen dioxide and a decomposition product of the trifluoroamine-N-oxide is nitrogen monoxide.

[Table 4]

|  | Sample/Cylinder | Fluorine-containing nitrogen compound | Decomposition product | |
|---|---|---|---|---|
|  |  |  | Type | Concentration (ppm by mass) |
| Ex. 1 | 1-1/A | Nitrosyl fluoride | Nitrogen monoxide | 320 |
| Ex. 2 | 1-2/B | Nitrosyl fluoride | Nitrogen monoxide | 346 |
| Ex. 3 | 1-3/C | Nitrosyl fluoride | Nitrogen monoxide | 381 |
| Comp. Ex. 1 | 1-4/D | Nitrosyl fluoride | Nitrogen monoxide | 3034 |
| Ex. 4 | 2-1/A | Nitroyl fluoride | Nitrogen dioxide | 91 |
| Ex. 5 | 2-2/B | Nitroyl fluoride | Nitrogen dioxide | 102 |
| Ex. 6 | 2-3/C | Nitroyl fluoride | Nitrogen dioxide | 143 |
| Comp. Ex. 2 | 2-4/D | Nitroyl fluoride | Nitrogen dioxide | 1230 |
| Ex. 7 | 3-1/A | Trifluoroamine-N-oxide | Nitrogen monoxide | 239 |
| Ex. 8 | 3-2/B | Trifluoroamine-N-oxide | Nitrogen monoxide | 251 |
| Ex. 9 | 3-3/C | Trifluoroamine-N-oxide | Nitrogen monoxide | 300 |
| Comp. Ex. 3 | 3-4/D | Trifluoroamine-N-oxide | Nitrogen monoxide | 2867 |

**Claims**

1. A method for storing a fluorine-containing nitrogen compound,

the fluorine-containing nitrogen compound being at least one type among nitrosyl fluoride, nitroyl fluoride, and trifluoroamine-N-oxide,
the method comprising:

storing the fluorine-containing nitrogen compound in a container, wherein
the fluorine-containing nitrogen compound contains or does not contain at least one type among manganese, cobalt, nickel, and silicon as metal impurities and, when any of the manganese, the cobalt, the nickel, and the silicon is contained, a total concentration of the manganese, the cobalt, the nickel, and the silicon is set to 1000 ppb by mass or less.

2. The method for storing a fluorine-containing nitrogen compound according to claim 1, comprising:

storing the fluorine-containing nitrogen compound in a container, wherein
the fluorine-containing nitrogen compound further contains or does not contain at least one type among sodium, potassium, magnesium, and calcium as the metal impurities and, when any of the sodium, the potassium, the magnesium, and the calcium is contained, a total concentration of the manganese, the cobalt, the nickel, and the silicon and the sodium, the potassium, the magnesium, and the calcium is set to 2000 ppb by mass or less.

3. The method for storing a fluorine-containing nitrogen compound according to claim 1 or 2 comprising:
storing the fluorine-containing nitrogen compound at a temperature of -20°C or more and 50°C or less.

4. The method for storing a fluorine-containing nitrogen compound according to claim 1 or 2, wherein a material of the container is manganese steel.

## INTERNATIONAL SEARCH REPORT

| International application No. |
| --- |
| **PCT/JP2023/013517** |

**A. CLASSIFICATION OF SUBJECT MATTER**

*C01B 21/084*(2006.01)i
FI: C01B21/084

According to International Patent Classification (IPC) or to both national classification and IPC

**B. FIELDS SEARCHED**

Minimum documentation searched (classification system followed by classification symbols)

C01B21/084

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2022-515063 A (L'AIR LIQUIDE, SOCIETE ANONYME POUR L'ETUDE ET L'EXPLOITATION DES PROCEDES GEORGES CLAUDE) 17 February 2022 (2022-02-17) claims, paragraphs [0014], [0082] | 1-3 |
| A | | 4 |
| Y | JP 2004-270917 A (MITSUI CHEMICALS INC) 30 September 2004 (2004-09-30) claims, paragraphs [0001]-[0005] | 1-4 |
| Y | JP 2021-509538 A (L'AIR LIQUIDE, SOCIETE ANONYME POUR L'ETUDE ET L'EXPLOITATION DES PROCEDES GEORGES CLAUDE) 25 March 2021 (2021-03-25) claims, paragraphs [0002], [0003], [0042], [0062] | 1-4 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **06 June 2023** | **13 June 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2023/013517**

| Patent document cited in search report | | | Publication date (day/month/year) | Patent family member(s) | | | Publication date (day/month/year) |
|---|---|---|---|---|---|---|---|
| JP | 2022-515063 | A | 17 February 2022 | WO 2020/131556 A1 claims, paragraphs [0014], [0081] | | | |
| | | | | US 2020/0203127 A1 | | | |
| | | | | CN 113056811 A | | | |
| | | | | KR 10-2021-0100186 A | | | |
| JP | 2004-270917 | A | 30 September 2004 | US 2004/0026417 A1 claims, paragraphs [0001]-[0007] | | | |
| | | | | KR 10-2004-0014234 A | | | |
| | | | | CN 1480295 A | | | |
| JP | 2021-509538 | A | 25 March 2021 | WO 2019/133292 A1 claims, paragraphs [0002], [0003], [0040], [0060] | | | |
| | | | | US 2019/0206696 A1 | | | |
| | | | | KR 10-2020-0090244 A | | | |
| | | | | CN 111512420 A | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021509538 A

- US 20200203127 A